# EUROPEAN PATENT APPLICATION

(11) **EP 2 157 068 A2**
(43) Date of publication of application: **24.02.2010**
(21) Application number: 09166116.5
(22) Date of filing: 22.07.2009
(51) Int. Cl.: C04B 35/83, F16D 69/02

(54) **C-C composite brakes with improved wear rates**

(30) Priority: 28.07.2008 US 180914
(71) Applicant: Honeywell International Inc., Morristown, NJ 07962 (US)
(72) Inventor: Murdie, Neil, Morristown, NJ 07962-2245 (US)
(74) Representative: Buckley, Guy Julian

(57) **Abstract**

Carbon-carbon composite brake discs are manufactured by processes that include the use of PAN or pitch fibers and their combinations, combined with pitch, resin, or CVD/CVI matrix carbons. An additional process step is provided, in which a controlled amount of a carbon additive, such as carbon black and/or activated carbon, is infiltrated in to the bulk porosity of the composite prior to one or more of the densification cycles. Typical methods of infiltration include use of a solution or suspension of the powdered carbon in water or solvent solution so as to uniformly distribute the particulates throughout porosity within the carbon fiber preform prior to one or more of the densification cycles. The presence of the activated carbon and/or carbon black additive, distributed throughout the carbon-carbon composite brake disc, facilitates the adsorption and retention of available moisture in the composite. In use, the moisture is released into friction films which form on the composite brake discs, so that their lubricating properties are obtained, for instance during cold taxi stops, thereby lowering wear rates.

## Description

### FIELD OF THE INVENTION

This invention relates to the manufacture of carbon-carbon composite friction materials, useful, for instance, as brake discs in the landing systems of large aircraft.

### BACKGROUND OF THE INVENTION

Carbon-carbon composites have been used as friction materials in aircraft braking applications for more than 20 years. Typical C-C composites are manufactured from PAN (polyacrylonitrile) or pitch fiber performs densified with gaseous carbon (by Chemical Vapor Deposition or Chemical Vapor Infiltration) or with pitch or resin - or with combinations of CVD/CVI/pitch/resin - to achieve a final density of between 1.7-1.8 g/cc. While the friction and wear performance of C-C composites is typically quite good, improvements to the wear life of the brakes used in aircraft and automotive applications are constantly required by the end user as well as the suppliers.

US 5,895,716, entitled WET FRICTION MATERIALS, METHODS OF MAKING THEM, AND APPARATUS CONTAINING THE SAME, discloses carbon-carbon composite materials which comprise carbon fibers or carbon fabric, carbon char on the carbon fiber or fabric, and pyrolytic carbon on the carbon char.

US 5,952,249, entitled AMORPHOUS CARBON-COATED CARBON FABRIC WET FRICTION MATERIAL, discloses a method of forming an amorphous carbon-coated carbon fabric which comprises the steps of impregnating a woven carbon fabric with a resin and heating the resulting resin-impregnated carbon fabric to a temperature sufficient to char the resin to form a residue of amorphous carbon, thereby forming an amorphous carbon-coated carbon fabric material.

Carbon-carbon composites provide good friction and braking performance in automotive and aerospace applications. However, they tend to suffer from high wear rates. The friction and wear properties of C-C composites are strongly influenced by the presence of moisture in their environments. Moisture tends to reduce the friction that can be generated by the C-C materials, and also to lower their wear rates. See, for instance, J.D. Chen, et al., "Effect of Humidity on the Tribological Behavior of C-C Composites", Wear, 193:38-47 (1996); J.W. Midgley, et al., "An Investigation of the Mechanism of the Friction and Wear of Carbon", Trans ASME (D) J. Basic Engineering, Vol. 85, pp 488-495 (1963).

The friction and wear of carbon composites is also known to be strongly influenced by the presence of 3^{rd} body friction films, the composition of the composite (fiber and matrix type) as well as environmental effects (humidity, contamination from oils, and deicer fluids etc.,). For example, the presence of good friction films provides a sacrificial layer of 3^{rd} body wear debris that helps to protect the underlying bulk carbon from oxidation and wear. It is likewise known that lubricating effects of graphite is only apparent in the presence of moisture and that under vacuum the same carbon exhibits high friction and high wear rates (dusting). See, for instance, J.W. Midgley, *et al., op. cit*; R. H. Savage, "Graphite Lubrication", J. of Applied Physics, Vol. 19, No.1, pp 1-10 (1948).

The level of humidity varies significantly from region to region where C-C composite brakes are utilized. Therefore, the friction and wear performance of a brake can also exhibit considerable variation. For instance, a brake operating in Brazil (South America) and traveling to Chicago (USA) in winter changes from high humidity to low humidity, with resulting changes in the friction and wear performance of the brake due to those differing environments.

### SUMMARY OF THE INVENTION

The process of the present invention employs standard C-C composite components and processes that include the use of PAN or pitch fibers and their combinations, combined with pitch, resin, or CVD/CVI matrix carbons. However, this new invention includes an additional process step in which a controlled amount of a carbon additive (such as carbon black and/or activated carbon) is infiltrated in to the bulk porosity of the composite prior to one or more of the densification cycles.

Controlled amounts of the selected additive or combinations of additives are introduced into the open porosity of the carbon following the 1^{st} and/or 2^{nd} and/or 3^{rd} cycle of densification, or, if a 3^{rd} cycle is not the last cycle, then the pre-final densification cycle.

Typical methods of infiltration in this invention include the use of a solution or suspension of the powdered carbon in water or solvent solution so as to uniformly distribute the particulates throughout porosity within the carbon fiber preform prior to one or more of the densification cycles.

Typically the additive is not added prior to the first densification cycle, because the particulates tend to modify the initial CVI/pitch/resin matrix microstructure and to produce a different (fine grained) microstructure adjacent to the fiber interface. This has previously been found to be detrimental to friction performance. However, in cases where high friction is not required and/or where very low wear rates are required, the additive may be added prior to the first cycle of densification.

A principle of the present invention involves the fundamental friction and wear mechanism of carbons and graphites. It has been shown previously that the lubricating effect of graphite is related to the presence of moisture during friction applications. The friction and wear of carbons and graphites is low in humid environments while the friction and wear values increase under dry air conditions. The present invention takes advantage of the lubricating properties of graphite and associated low friction and wear values via the addition of the carbon powders whose properties include a high affinity for moisture via an adsorption mechanism. In this way, water is retained within the porosity of the composite. The carbon additives selected (activated carbons and carbon blacks) typically have higher surface areas than the standard carbon fiber and matrix components and are able to adsorb moisture more readily. Therefore, the presence of the carbon additive throughout the bulk of the composite helps to provide a "reservoir" of moisture within the porosity of the composite.

It is reported that the wear rate of carbon is highest under cold taxi energy conditions - that is, while the aircraft is taxiing on the run-way prior to take-off. It is believed that the high wear rate during taxi operations is caused by the disruption of the friction film that is formed on the friction surfaces of the discs during the landing stop being disturbed and removed from the friction surfaces during the low energy cold taxi stops. In addition, moisture that may be present in the discs is removed during the first few taxi stops, since the temperature of the brakes during the stops typically exceeds 200°C. The removal of the moisture prevents the lubricating effect of the carbon (friction films) to occur resulting in higher wear rates during the cold taxi sequence of stops.

The presence of the activated carbon / carbon black additive, distributed throughout the C-C composite, facilitates the adsorption and retention of available moisture. The moisture is then released into the friction films so that their lubricating properties are obtained during the cold taxi stops, thereby lowering wear rates. The porosity within the carbon additive is able to adsorb and retain any moisture from the atmosphere better than the bulk C-C composite carbons. This facilitates the lubrication effect of the friction films to be realized.

Based on comparison of wear rates operating in dry versus humid environments, the use of carbon additives is expected to lead to improvements to wear rates in the range of 10-30%. The specific wear rate improvements will depend on a combination of factors, including but not limited to the carbon processing conditions, the energy of the braking applications, the temperature of the brakes, the levels of humidity present during braking, the operating conditions employed during braking, and so on.

In accordance with the present invention, the carbon preform is typically infiltrated with 0.1-5 weight-% of the additive, based on the weight of the preform, in connection with any single densification step. The carbon additive, contained in a solution/suspension of water or solvent, is infiltrated into the preform, and the composite is then dried (e.g., by heating or vacuum) prior to the next densification cycle.

### DETAILED DESCRIPTION OF THE INVENTION

Previous efforts to improve the wear rates of C-C composites have attempted to do so by adding particulates such as ceramics or by changing the type of fiber and matrix carbons or their heat treatments. However, the present invention focuses on taking advantage of the lubricating effect of graphite in the presence of moisture to lower wear rates and increase the life of the brake material through controlled use of carbon additives.

This invention describes a method of processing C-C composites that incorporates specific carbon additives that selectively and preferentially interact with the moisture in the atmosphere to reduce the wear rates of the friction material and increase the life of C-C composites while maintaining good stable friction performance.

In one embodiment, this invention provides a method of manufacturing a carbon-carbon composite brake disc that has improved wear rates and consistent friction performance. The method of this invention includes several sequential steps, as follows.

First, an annular carbon fiber preform is provided. The carbon fiber preform may be, for instance, a nonwoven preform or a preform that consists of chopped fibers which are randomly oriented or a preform that consists of chopped fibers which are oriented to provide strength and thermal and friction and wear performance.

Then, the carbon fiber preform is carbonized/heat-treated at 1200-2540°C.

Then, the carbon fiber preform is infiltrated with carbon using pitch, resin, or CVI/CVD processing to increase the density of the preform.

In the case of pitch densification, the pitch-infiltrated preform is optionally stabilized to rigidize it and prevent pitch exudation from the preform during subsequent carbonization. An oxidative stabilization step may be carried out, e.g., at a temperature between about 150 and 250°C.

In the case of pitch and resin densification, the pitch and/or resin infiltrated preform is carbonized between 900-2540°C, generally in an inert (nitrogen or vacuum) atmosphere.

Between densification cycles, the surfaces of the preform are optionally machined to open surface porosity after carbonization or CVI/CVD processing, thereby facilitating weight increases in the preform during subsequent densification steps.

Any of the foregoing infiltration (densification) steps is repeated sufficient times to achieve a final density in the preform of approximately 1.6 to 1.85 g/cc.

In accordance with the present invention, a step of infiltrating the carbon fiber preform with 0.1 to 5 weight-% (preferably 1 to 2 weight-%) based on the weight of the preform, of a carbon additive which adsorbs moisture from the atmosphere is performed prior to one or more of the foregoing infiltration (densification) steps. The maximum particle size of the carbon additive is normally between 1 and 10 microns. The carbon additive may be, for instance, an activated carbon powder with high surface area or a carbon black with high surface area or a combination of activated carbon with carbon black. The additive may be introduced into the composite through vacuum infiltration of a suspension of the carbon particles held in a solvent such as water or acetone. The solvent would then typically be removed, e.g. by drying the additive-infiltrated composite at 110°C for 24 hrs or by heating it to 110°C for 24 hrs under vacuum. Alternatively, the solvent may be allowed to evaporate without heating, or the solvent may be dried out of the composite by subjecting the preform to vacuum.

Often, a final heat-treatment step is carried out at a temperature between about 1200 and 2540°C in an inert (nitrogen or vacuum) atmosphere.

In another embodiment, the present invention provides a carbon-carbon composite brake disc produced by the process described above.

Preferred additives in accordance with the present invention include: (1) carbon black; and (2) activated carbon, including but not limited to fibers, powders, and activated carbon black.

This invention provides a C-C composite that can be used as a friction material in braking application for automobiles and aircraft and that overcomes some of the difficulties associated with changes in the moisture level of the brake's environment. This invention adds carbon black or activated carbon to the C-C composite. This additional carbon adsorbs available humidity and retains the moisture within the micropores of the additive. The chemically adsorbed water is retained within the carbon structure, and helps to provide low wear rates by allowing the lubrication properties of the 3^{rd} body friction films to be realized for an extend period. This process continues through the life of the brake.

The method of the present invention includes several sequential steps. First, an annular carbon fiber preform is provided. This carbon fiber preform may be made from nonwoven fabric or may be made up with randomly oriented chopped fibers. This carbon fiber preform is carbonized or heat-treated at 1200-2540°C, preferably between about 1200 and 2200°C in an inert nitrogen atmosphere (nitrogen or vacuum).

The carbon fiber preform is then infiltrated with gaseous carbon using CVI/CVD processing or with pitch or resin. The pitch/resin infiltrated or gaseous carbon infiltrated preform is carbonized between 1200-2540°C. Carbonization may be preceded by an optional stabilization step, for instance oxidative stabilization carried out at 150-250°C, to rigidize the pitch and prevent exudation from the preform during carbonization. Carbonization may be followed by an optional machining step to "clean" the surfaces of the preform and open surface porosity. Since CVI/CVD processing is normally performed above 1000°C, there is usually no need to perform a separate carbonization step following a CVI/CVD densification. Thus, in the context of the present invention, CVI/CVD processing may be considered to include a carbonization step. The infiltration and subsequent carbonization steps as described above are repeated at least once, to achieve a density in the carbon fiber preform of approximately 1.5 - 1.7 g/cc.

Prior to one or more of the densification steps, the carbon fiber preform is infiltrated with a carbon additive designed to adsorb moisture from the atmosphere. The carbon additive particles used in accordance with this invention will typically have sizes ranging from 1 to 10 microns. The additive may be introduced into the preform through vacuum infiltration of a suspension of the carbon particles in a solvent such as water or acetone. The solvent can be dried out of the additive-infiltrated preform by drying. Drying may be accomplished by heating to a suitable temperature (e.g., 110°C for 24 hours), with or without the use of vacuum. Alternatively, the solvent may be allowed to evaporate out of the preform without a specific heating step, with or without vacuum assistance.

The inventive processing described above may be followed by additional steps. For instance, one may conduct an optional final heat treatment of the densified C-C composite to 1200-2540°C, typically in an inert nitrogen or vacuum atmosphere. The composite will generally be machined to its final dimensions, and then will typically have anti-oxidant coating applied to it to protect the carbon from oxidation.

The present invention makes use of carbon-carbon composite densification techniques which are, in general, well known to persons skilled in the art of manufacturing carbon-carbon composite friction materials for use in such applications as high performance brake discs. Outlines of such techniques follow.

CVD/CVI. Chemical vapor deposition (CVD) of carbon is also known as chemical vapor infiltration (CVI). In a CVD/CVI process, carbonized, and optionally heat treated, preforms are heated in a retort under the cover of inert gas, typically at a pressure below 100 torr. When the parts reach a temperature of 900° to 1200°C., the inert gas is replaced with a carbon-bearing gas such as methane, ethane, propane, butane, propylene, or acetylene, or combinations of these gases. When the hydrocarbon gas mixture flows around and through the porous structures, a complex set of dehydrogenation, condensation, and polymerization reactions occur, thereby depositing the carbon atoms within the interior and onto the surface of the porous structures. Over time, as more and more of the carbon atoms are deposited onto the structures, the porous structures become more dense. This process is sometimes referred to as densification, because the open spaces in the porous structures are eventually filled with a carbon matrix until generally solid carbon parts are formed. Depending upon the pressure, temperature, and gas composition, the crystallographic structure and order of the deposited carbon can be controlled, yielding anything from an isotropic carbon to a highly anisotropic, ordered carbon. US 2006/0046059 Al (Arico et al.), the disclosure of which is incorporated herein by reference, provides an overview of CVD/CVI processing.

VPI. Vacuum Pressure Infiltration ("VPI") is a well known method for impregnating a resin or pitch into a preform. The preform is heated under inert conditions to well above the melting point of the impregnating pitch. Then, the gas in the pores is removed by evacuating the preform. Finally, molten pitch is allowed to infiltrate the part, as the overall pressure is returned to one atmosphere or above. In the VPI process a volume of resin or pitch is melted in one vessel while the porous preforms are contained in a second vessel under vacuum. The molten resin or pitch is transferred from vessel one into the porous preforms contained in the second vessel using a combination of vacuum and pressure. The VPI process typically employs resin and pitches which possess low to medium viscosity. Such pitches provide lower carbon yields than do mesophase pitches. Accordingly, at least one additional cycle of pitch infiltration of low or medium char-yield pitch (with VPI or RTM processing) is usually required to achieve a final density of 1.7 g/cc or higher.

RTM. Resin Transfer Molding ("RTM") is an alternative to the use of VPI for the production of polymer-based composites. In Resin Transfer Molding, a fibrous preform or mat is placed into a mold matching the desired part geometry. Typically, a relatively low viscosity thermoset resin is injected at low temperature (50 to 150°C) using pressure or induced under vacuum, into the porous body contained within a mold. The resin is cured within the mold before being removed from the mold. US 6,537,470 B1 (Wood et al.) describes a more flexible RTM process that can make use of high viscosity resin or pitch. The disclosure of US 6,537,470 B1 is incorporated herein by reference.

Carbonization. The carbonization process is generally well known to those skilled in the art. The CVD/resin/pitch-infiltrated fiber preforms are heated in a retort under inert or reducing conditions to remove the non-carbon constituents (hydrogen, nitrogen, oxygen, etc.) from the fibers and matrix carbons. This process may be performed, for instance, by burying the foam preforms in a bed of activated carbon, enclosed in a superalloy retort with a sand seal. Carbonization of the infiltrated pitch can be carried out either in a furnace, a hot isostatic press, an autoclave, or in a uniaxial hot press. In each of these techniques, the impregnated part is heated to the range of 600° to about 1000°C, while maintaining an inert atmosphere in the pressure range of 1 to 1000 atmospheres. In one approach, for instance, the retort is purged gently with nitrogen for approximately 1 hour, then it is heated to 900°C in 10-20 hours, and thence to 1050°C in 1-2 hours. The retort is held at 1050°C for 3-6 hours, then allowed to cool overnight. Carbonization can be carried out up to 1800°C. The higher the pressure, the higher the carbon yield achieved, although the biggest gains in carbon yield are achieved at moderate pressures up to 5000 psi.

Stabilization/Carbonization. Carbonization refers to the heating of carbon materials in an inert atmosphere to temperatures typically between 700 and 1600°C. The purpose of carbonization in the manufacture of carbon-carbon composites from fibers, pitches, etc. is to remove non-carbon elements such as H, N, O, S, and other impurities from the pitch matrices to form a solid, carbon rich matrix. During carbonization, the volatiles from the pitch are released on porosity is generated in the composite, which has to be filled with pitch during subsequent pitch densification cycles. A stabilization step may be conducted to rigidize the pitch and prevent exudation from the preform during subsequent carbonization processing. The stabilization step may be oxidative stabilization carried out at a temperature of about 150-250°C to rigidize the pitch and prevent its exudation during carbonization. Alternatively, mechanical or gaseous pressure can be used during carbonization, with or without a containment vessel, to prevent the preform from bloating and to limit the amount of pitch exudate. In some instance, the pitch-densified preforms do not require stabilization prior to carbonization. In such cases, the preforms are typically restrained and/or contained to limit the amount of pitch exudate.

Heat treatment. Intermediate and/or final heat treatment of the preforms is usually applied to modify the crystal structure of the carbon. Heat treatment is employed to modify the mechanical, thermal, and chemical properties of the carbon in the preform. Heat treatment of the preforms is typically conducted in the range of 1400° to 2800°C. The effect of such a treatment on graphitizable materials is well known. Higher temperatures increase the degree of crystalline order in the carbon material, as measured by such analytical techniques as X-ray diffraction or Raman spectroscopy. Higher temperatures also increase the thermal conductivity of the carbon in the products, as well as the elastic modulus, and typically result in lower wear rates.

Machining the surfaces of the preform. Standard machining processes, well know to persons skilled in the art of manufacturing carbon-carbon composite brake discs, are used in the manufacture of the carbon-carbon composite friction discs provided by the present invention. Between densification processing steps, the surfaces of the annular discs are ground down to expose porosity in the surfaces. Once the final density is achieved, the annular discs are ground to their final thickness using standard grinding equipment to provide parallel flat surfaces, and then the inside diameter and outside diameter regions are machined, typically using a CNC (computer numerical control ) Mill to provide the final brake disc geometry, including such features as rivet holes and drive lugs.

### EXAMPLES

A nonwoven carbon fiber preform is carbonized at 1600-2400°C. The carbonized preform is densified by CVI/CVD, and/or pitch (using VPI), and/or resin (using RTM) to a density in the range of about 1.1 g/cc to about 1.5 g/cc. The densified preform is infiltrated with a solution containing carbon black or with a solution containing activated carbon. This infiltration is continued until the preform achieves a weight increase of from 0.1% to 2%. The preform is then densified by CVI/CVD to a final density of at least 1.7 g/cc. The fully densified preform is subjected to a final heat treatment at 1600-2400°C. The preform is then machined to its final dimensions for use as a brake disc. Anti-oxidant paint is applied thereto, and the anti-oxidant coated brake disc is charred to prepare it for use, for instance in an aircraft landing system.

In a preferred embodiment of the invention, a PAN fiber preform is first densified by CVI ( pitch / or resin can also be used). Further densification is performed with either CVI, pitch or resin to achieve a density of approx 1.6 - 1.7 g/cc. Prior to the final densification

cycle the selective additive suspended in water or solvent is infiltrated into the composite to form a uniform distribution throughout the bulk of the composite. The additive contained within the open porosity of the carbon composite is then dried to remove the solution / solvent and then the composite densified a final time to bind the carbon additive into the composite.

Infiltration with the moisture-adsorbing carbon additive may be performed prior to the final carbon densification process and the final heat treatment, since the carbon additive is not adversely impacted by the heat treatment processing. Alternatively, the carbon additive may be infiltrated into the carbon preform prior to any one or more of the CVI/CVD densification steps.

Examples of Process Options for Carbon Additives for Improved Wear:

| *Preform* | *Carboni zation*/*Heat Treatment (°C)* | *Add carbon particulate* | *Densi fication step 1* | *Add carbon particulate* | *Densi fication Step 2* | *Add carbon particulate* | *Densi fication Step 3* | *Heat Treatment (°C)* |
|---|---|---|---|---|---|---|---|---|
| Nonwoven PAN fiber | 1600 | 1% activated carbon | CVD | N/A | CVD | N/A | CVD | 1800 |
| Nonwoven PAN fiber | 1800 | N/A | CVD | 2% carbon black | RTM pitch | N/A | CVD | 2000 |
| Nonwoven pitch fiber | 2000 | N/A | CVD | N/A | CVD | 2% activated carbon | Resin | 1600 |
| Random fiber | 1800 | N/A | Resin / CVD | 2% carbon black | RTM pitch | N/A | CVD | 2000 |
| Random fiber | 2000 | N/A | RTM pitch | N/A | RTM pitch | 2% activated carbon | CVD | 1600 |
| Nonwoven PAN fiber | 1400 | N/A | RTM pitch | N/A | CVD | 2% activated carbon | CVD | 1800 |
| Nonwoven PAN fiber | 2500 | N/A | Resin / CVD | N/A | Resin | 2% carbon black | CVD | 1800 |
| Nonwoven PAN fiber | 1800 | N/A | CVD | 2% carbon black | RTM pitch | N/A | Resin | 2000 |
| Nonwoven PAN fiber | 2000 | N/A | CVD | N/A | Resin | 1.5% activated carbon | CVD | 2200 |
| Nonwoven PAN fiber | 1600 | N/A | VPI pitch | 2% carbon black | VPI pitch | N/A | CVD | 1800 |
| Nonwoven PAN fiber | 1400 | N/A | CVD | N/A | RTM pitch | 2% activated carbon | CVD | 2000 |

The present invention has been described herein in terms of preferred embodiments. However, obvious modifications and additions to the invention will become apparent to those skilled in the relevant arts upon a reading and understanding of the foregoing description. It is intended that all such modifications and additions form a part of the present invention to the extent that they fall within the scope of the several claims appended hereto.

## Claims

1. A method of manufacturing a carbon-carbon composite brake disc with improved wear rates and consistent friction performance, said method comprising the following sequential steps:
providing an annular carbon fiber preform;
carbonizing/heat-treating the carbon fiber preform at 1200-2540°C;
infiltrating the carbon fiber preform with carbon using pitch, resin, or CVI/CVD processing to increase the density of the preform;
in the case of pitch densification, optionally stabilizing the pitch-infiltrated preform to rigidize it and prevent pitch exudation from the preform during subsequent carbonization;
in the case of pitch and resin densification, carbonizing the pitch and/or resin infiltrated preform between 900-2540°C;
optionally machining the surfaces of the preform to open surface porosity after carbonization or CVI/CVD processing, thereby facilitating weight increases in the preform during subsequent densification steps; and
repeating the foregoing infiltration (densification) steps sufficient times to achieve a final density in the preform of approximately 1.6 to 1.85 g/cc,
wherein, prior to one or more of the infiltration (densification) steps, a step is performed of infiltrating the carbon fiber preform with 0.1 to 5 weight-%, based on the weight of the preform, of a carbon additive, having a maximum particle size between 1 and 10 microns, which adsorbs moisture from the atmosphere.

2. The method of claim 1, wherein the method of introduction of additive is through vacuum infiltration of a suspension of the carbon particles held in a solvent.

3. The method of claim 2, wherein the solvent is dried at 110°C for 24 hrs, optionally under vacuum.

4. The method of claim 2, wherein the solvent is allowed to evaporate without heating

5. The method of claim 2, wherein the solvent is dried by subjecting the preform to vacuum.

6. The method of claim 1, wherein the carbon fiber preform is a nonwoven preform.

7. The method of claim 1, wherein the carbon fiber preform consists of chopped fibers which are randomly oriented or which are oriented to provide strength and thermal and friction and wear performance.

8. The method of claim 1, wherein a carbonization step is carried out at a temperature between about 900 and 2540°C in an inert (nitrogen or vacuum) atmosphere.

9. The method of claim 1, wherein a final heat-treatment step is carried out at a temperature between about 1200 and 2540°C in an inert (nitrogen or vacuum) atmosphere.

10. A carbon-carbon composite brake disc produced by the method of claim 1.
